Europäisches Patentamt

European Patent Office

Office européen des brevets

(11) Numéro de publication : **0 426 511 B1**

## (12) FASCICULE DE BREVET EUROPEEN

(45) Date de publication du fascicule du brevet :
16.12.92 Bulletin 92/51

(51) Int. Cl.⁵ : **G01V 1/22**

(21) Numéro de dépôt : **90402676.2**

(22) Date de dépôt : **27.09.90**

(54) **Dispositif modulaire de réception, d'acquisition et de transmission de données sismiques à plusieurs niveaux de multiplexage.**

(30) Priorité : **03.11.89 FR 8914556**

(43) Date de publication de la demande :
**08.05.91 Bulletin 91/19**

(45) Mention de la délivrance du brevet :
**16.12.92 Bulletin 92/51**

(84) Etats contractants désignés :
**DE GB IT NL**

(56) Documents cités :
**EP-A- 0 228 932**

(56) Documents cités :
**EP-A- 0 285 519**
**WO-A-85/01360**
**GB-A- 2 067 056**
**US-A- 4 041 442**
**US-A- 4 312 051**
**US-A- 4 628 493**

(73) Titulaire : **INSTITUT FRANCAIS DU PETROLE**
**4, Avenue de Bois Préau**
**F-92502 Rueil-Malmaison (FR)**

(72) Inventeur : **Beauducel, Claude**
**8, rue Talon**
**F-60119 Henonville (FR)**

Jouve, 18, rue Saint-Denis, 75001 PARIS

# Description

L'invention a pour objet un dispositif modulaire de réception, d'acquisition et de transmission à un poste central de commande et d'enregistrement de signaux sismiques ou acoustiques dans un milieu liquide, ce dispositif étant utilisable notamment pour des opérations de prospection sismique marine par exemple.

Pour les besoins de la prospection sismique marine par exemple, on utilise actuellement des systèmes d'acquisition et de transmission de signaux sismiques contenus dans des gaînes de souvent plusieurs kilomètres de long que l'on désigne sous le nom de flûtes sismiques et qui sont remorquées en immersion par un navire le long d'un profil sismique à explorer. Elles comportent un nombre souvent important de tronçons successifs interconnectés par des boîtiers rigide. Des récepteurs sismiques constitués chacun par exemple d'un ou de plusieurs hydrophones, sont répartis le long de chaque tronçon. Ces récepteurs sont connectés à un appareil d'acquisition disposé dans un boîtier d'interconnexion, qui est adapté à échantillonner, numériser et mémoriser tous les signaux reçus. Les différents appareils d'acquisition sont généralement connectés au laboratoire central sur le navire par des lignes de transmission communes réparties en deux groupes. Un premier groupe de lignes dites "aller" servent à la transmission d'ordres ou de commandes adressés aux différents appareils par le laboratoire. Un second groupe de lignes dites "retour" servent à la transmission vers le laboratoire des réponses des différents appareils et notamment des données mémorisées à l'issue de chaque cycle d'émission et de réception sismique. Une flûte sismique est décrite par exemple dans le brevet FR 2 471 088 (US 4 398 271).

La tendance actuelle est à l'allongement des flûtes sismiques et à l'acccroîssement du nombre total de récepteurs. Ceci permet à la fois de réduire l'intertrace, c'est-à-dire l'intervalle entre deux emplacements adjacents du profil sismique étudié, et d'accroître la finesse de restitution des enregistrements, par combinaison et traitement des signaux enregistrés.

L'augmentation du nombre de récepteurs dans chaque tronçon de flûte rend nécessaire une augmentation corrélative de la densité d'intégration des composants électroniques qui y sont contenus. La présence de boîtiers relativement lourds entre des tronçons remplis d'un liquide qui leur assure une certaine flottabilité, a pour effet de déformer la flûte. La traînée de la flûte augmente ce qui induit des signaux parasites qui viennent se superposer aux signaux utiles.

En outre, la longueur des liaisons entre les récepteurs et les appareils d'acquisition, qui peut atteindre plusieurs dizaines de mètres, augmente leur sensibilité aux signaux parasites. Une solution au problème posé par l'allongement des flûtes et l'augmentation corrélative de la masse des boîtiers est décrite dans le brevet FR 2.590.684 (US 4 787 069) qui est relatif à une flûte où chaque récepteur sismique est associé à un module électronique placé dans son voisinage immédiat et chargé d'amplifier et d'adapter les signaux analogiques fournis par les récepteurs.

La complexité des flûtes à haute densité d'intégration pose un autre problème au stade de leur développement si l'on veut que le produit réponde à toutes les conditions particulières imposées par les opérateurs. On vérifie au cours de l'exploitation des flûtes que leur structure est souvent trop figée et que leur adaptation à des conditions opératoires non prévues à l'origine est difficile, sinon impossible. Leur éventuelle adaptation entraîne un renchérissement parfois considérable des coûts.

Le dispositif selon l'invention est adapté à recevoir, à acquérir et à transmettre à un poste central de commande et d'enregistrement, des signaux sismiques ou acoustiques dans un milieu liquide et les transférer en évitant par son caractère modulaire, les inconvénients mentionnés ci-dessus.

Il comporte une gaine de grande longueur constituée par l'interconnexion d'une série de sections interconnectées les unes aux autres par des boîtiers intercalés, un grand nombre de récepteurs d'ondes sismiques ou acoustiques répartis le long de la gaine et un système modulaire d'acquisition et de transmission audit poste central de commande et d'enregistrement des données reçus par les récepteurs d'ondes.

Ce système comporte un ensemble d'appareils d'acquisition pour collecter les signaux produits par les récepteurs sismiques répartis le long d'au moins une section de la gaine, ainsi qu'un ensemble de transmission comportant des modules de transmission répartis dans les boîtiers d'interconnexion et connectés au poste central par des câbles de transmission numérique comprenant des voies de transmission communes de signaux de service pour les ordres adressés par le poste central aux différents appareils d'acquisition, des moyens (4) de décodage de ces ordres et des voies de transmission communes de données pour le transfert audit poste central, des réponses des différents appareils d'acquisition.

Le dispositif selon l'invention est caractérisé en ce que :

- chaque appareil d'acquisition comporte un moyen de mémorisation de données, une pluralité d'unités d'acquisition disposées dans au moins une section de la gaine chacune de ces unités d'acquisition étant placée dans la gaine au voisinage d'une pluralité de récepteurs sismiques pour l'acquisition séquentielle des signaux qu'ils reçoivent, chaque unité d'acquisition comporte un élément de synchronisation local, et un élément convertisseur analogique numérique;
- l'ensemble de transmission comporte des lignes locales de transmission numérique des commandes reliant les moyens de décodage des ordres à l'élément de synchronisation local et des lignes locales de transmission numérique des données reliant tous les modules de transmission audit moyen de mémorisation de données;

- chaque module de transmission comporte des moyens de codage des signaux transmis au poste central par lesdites voies de transmission de données.

Chaque section de flûte renferme par exemple plusieurs unités d'acquisition associées chacune à plusieurs récepteurs sismiques et connectées par des lignes locales communes avec les moyens de décodage des ordres d'une part et avec l'ensemble de mémorisation et de codage d'autre part, dans le boîtier d'interconnexion adjacent.

Suivant un mode de réalisation, l'ensemble de transmission comporte des moyens pour engendrer un signal d'horloge (H) rythmant la transmission des signaux sur lesdites voies de transmission des données, comprenant un oscillateur d'horloge dans le boîtier d'acquisition le plus éloigné du laboratoire central.

Suivant un autre mode de réalisation l'ensemble de transmission comporte des moyens pour engendrer un signal d'horloge rythmant la transmission des signaux sur lesdites voies de transmission des données comprenant des oscillateurs d'horloge disposés dans une partie au moins des boîtiers d'interconnexion et des moyens de commutation pour sélectionner un quelconque des oscillateurs d'horloge sur commande des moyens de décodage.

Ledit signal d'horloge est appliqué par exemple à chaque moyens de mémorisation pour rythmer la lecture des données numérisées qu'il contient.

Chaque appareil d'acquisition du dispositif peut comporter un ensemble de test pour vérifier le bon fonctionnement des récepteurs et de chaque unité d'acquisition.

Suivant un mode de réalisation préféré, chaque récepteur sismique est associé à un ensemble d'adaptation des signaux reçus.

Chaque ensemble de test comporte par exemple un oscillateur de test dans un boîtier d'interconnexion adjacent, le signal issu de cet oscillateur étant dirigé sélectivement par un ensemble de commutation dans chaque unité d'acquisition et, sur commande de l'élément de synchronisation local, vers l'ensemble d'adaptation de signaux associé à chaque récepteur sismique.

Les ensembles d'adaptation des signaux reçus comportent par exemple des préamplificateurs et des filtres recevant les signaux produits par les récepteurs sismiques associés, un multiplexeur à plusieurs entrées pour recevoir les signaux amplifiés et filtrés, un amplificateur à gain variable, un convertisseur analogique-numérique et un synchronisateur d'émission.

Suivant un mode de réalisation, ladite voie de transmission des réponses comporte au moins une fibre optique.

Suivant un autre mode de réalisation, ladite voie de transmission des ordres comporte aussi au moins une fibre optique.

Chaque voie de transmission peut encore comporter deux canaux de transmission et des commutateurs disposés dans les boîtiers d'interconnexion pour sélectionner des canaux pour les signaux entrant dans chacun d'eux.

La structure du système avec ses appareils d'acquisition décentralisés sous forme d'unités d'acquisition placées au voisinage des récepteurs sismiques, ses moyens de gestion des échanges répartis dans les boîtiers d'interconnexion et dans les unités d'acquisition, et ses moyens de transmission entièrement numérisés aussi bien au niveau local dans chaque section qu'au niveau des liaisons avec le poste central, présente de nombreux avantages :

- L'électronique utilisée étant bien répartie tout au long de la flûte, facilite l'équilibrage et diminue la traînée hydrodynamique;

- Le rapport du signal au bruit est nettement amélioré du fait que les liaisons du type analogique sont courtes entre les récepteurs et les unités d'acquisition et que tous les transferts de et vers le poste de commande et d'enregistrement, se font suivant un mode numérique. Le dispositif selon l'invention avec sa structure décentralisée, peut gérer l'acquisition de signaux issus d'un nombre important de récepteurs, jusqu'à une trentaine de 'traces" sismiques. Il faut souligner que l'éventuelle concentration dans un boîtier d'interconnexion, de matériel électronique nécessaire à l'acquisition d'une telle quantité de signaux serait très difficile voire même impossible si l'on s'impose un niveau de bruit acceptable.

- Le nombre d'unités d'acquisition est augmenté par rapport aux flûtes antérieures où la collecte des données est effectuée exclusivement dans les boîtiers d'interconnexion. En revanche, leur coût unitaire et leur consommation électrique sont très inférieurs pour une vitesse de traitement et une précision données, du fait que chacune d'elles n'a à collecter qu'un nombre très restreint de signaux distincts.

La distribution des tâches étant assurée depuis le navire, exclusivement par des voies de transmission numérisées et gérées par des ensembles logiques de décodage situés dans les boîtiers et chacune des unités d'acquisition, la flûte sismique obtenue est facilement adaptable. Beaucoup de modifications dans ses cycles d'opérations, aussi bien dans les périodes de test que de saisie des données sismiques, peuvent être apportées par un changement dans les instructions envoyées depuis le poste central. Le coût du développement et de l'exploitation est donc plus réduit.

D'autres caractéristiques et avantages de la méthode et du dispositif selon l'invention apparaîtront mieux à la lecture de la description ci-après de modes de réalisation décrits à titre d'exemples non limitatifs, en se référant aux dessins annexés où :

- la Fig.1 montre schématiquement une flûte sismique marine remorquée en immersion;
- la fig.2 montre schématiquement l'arrangement des récepteurs et des unités d'acquisition dans chaque section de la flûte;
- la Fig.3 montre un synoptique de l'ensemble électronique contenu dans chaque boîtier d'interconnexion; et
- la Fig.4 montre un synoptique de chaque unité d'acquisition disposée dans les sections de flûte.

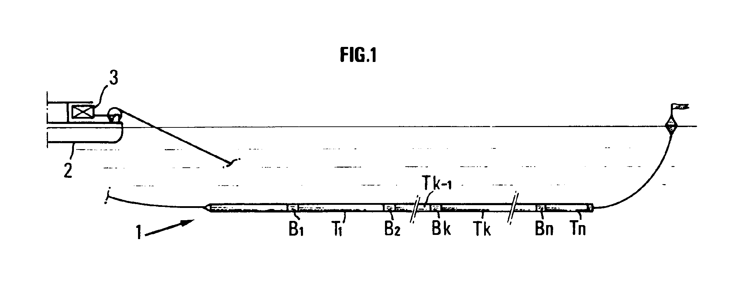

La flûte sismique schématisée à la Fig.1 comporte une gaîne souple 1 remplie de liquide, le long de laquelle sont répartis un très grand nombre de récepteurs sismiques. Elle est constituée d'une série de sections successives T1...Tk...Tn reliées les unes aux autres par des boîtiers d'interconnexion rigides B1...Bk...Bn. En opération, la flûte est remorquée en immersion derrière un navire 2 pourvu d'un poste ou laboratoire de commande et d'enregistrement 3.

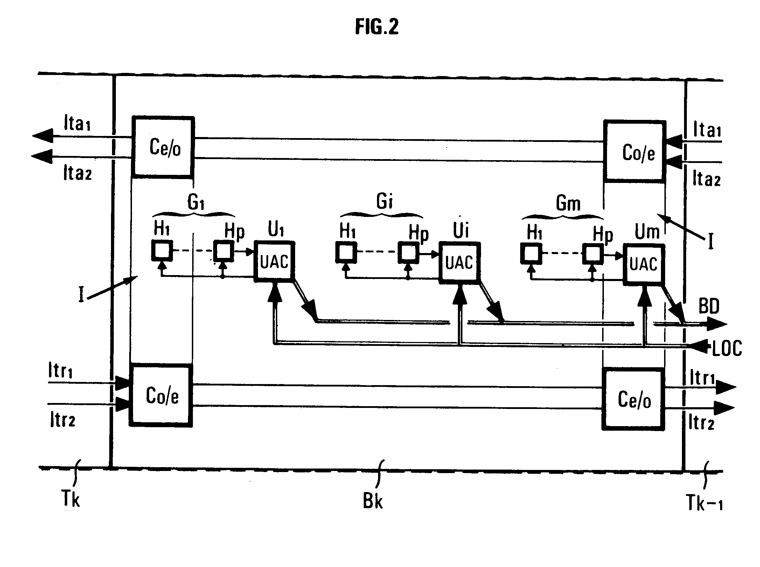

Le long de chaque section de flûte (Fig.2) sont répartis un nombre important de récepteurs sismiques tels que des hydrophones. Les récepteurs de chaque section sont répartis en un certain nombre m de groupes G1...Gi...Gm contenant chacun un nombre fixé p de récepteurs. Tous les récepteurs H1...Hp de chaque groupe sont reliés par une courte paire de conducteurs torsadés à une unité d'acquisition U1...Ui...Um disposée dans leur voisinage immédiat. On répartit par exemple 28 hydrophones dans chaque section on les subdivise en quatre groupes 7 hydrophones et on dispose 4 unités d'acquisition associées respectivement à ces quatre groupes.

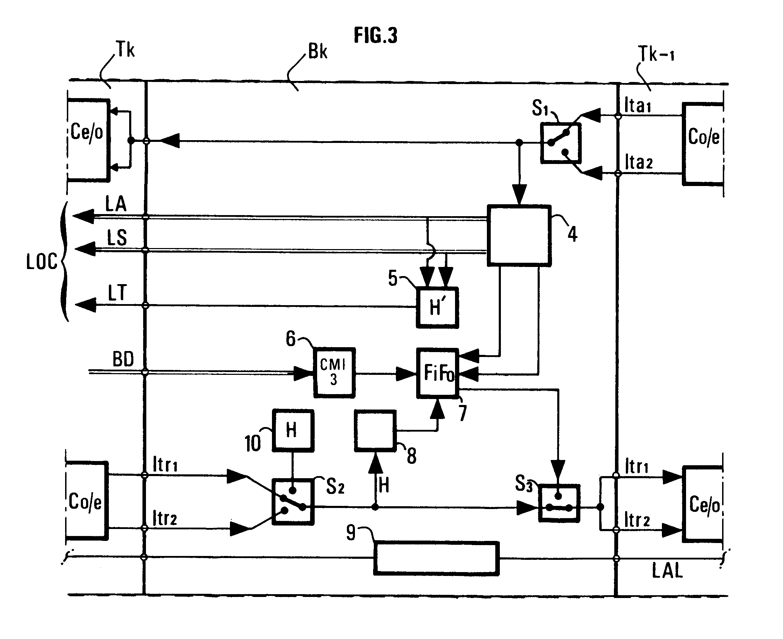

Toutes les unités d'acquisition U1 à Um de chaque section de flûte sont reliées à un ensemble électronique disposé dans un boîtier d'interconnexion à une extrémité, qui sera décrit en relation avec la Fig. 3. La liaison est assurée par des lignes de commande communes LC pour l'acheminement des ordres et instructions vers les unités d'acquisition et un bus de données commun pour le transfert en retour des réponses données par ces unités.

Le long de chaque section de flûte passe au moins une voie de transmission d'ordres et au moins une voie de transmission de données. Pour accroître la sécurité des transmissions, on dispose de préférence deux voies de transmission parallèles Ita1, Ita2 pour les ordres et deux voies de transmission parallèles ltr1, ltr2 pour les données. Dans le brevet précité FR 2.471.088, on décrit comment, par des tests préalables aux opérations de prospection sismique, on choisit une ligne de transmission "aller" satisfaisante Ita1 ou Ita2 et une ligne de transmission "retour" satisfaisante ltr1 ou ltr2.

Afin de faire face au débit de transmission requis pour la collecte des signaux captés par une flûte à grand nombre de traces et la gestion des transmissions, les voies de transmission "aller" et "retour" comportent des fibres optiques. A chaque extrémité de chaque section Tk, est disposé un ensemble d'interface I d'un type connu comportant deux modules Co/e et Ce/o assurant la traduction, le premier, des signaux optiques circulant sur les fibres en signaux électriques et le second, la traduction en sens inverse des signaux électriques en signaux optiques.

Dans chaque boîtier d'interconnexion Bk (Fig.3), les transmissions sont assurées par des portions de lignes électriques. Les deux voies "aller" Ita1 et Ita2 sont connectées aux entrées d'un premier commutateur S1. La sortie de celui-ci est connectée d'une part en parallèle aux deux entrées du module Ce/o de la section suivante Tk, et d'autre part à l'entrée d'un décodeur d'ordres 4.

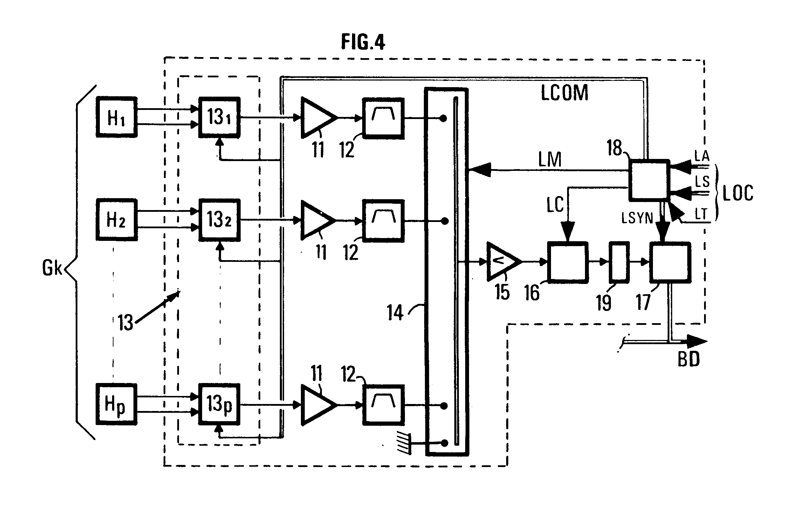

Le laboratoire central sur le navire envoie sur l'une des voies Ita1 ou Ita2, des ordres codés pourvus d'adresses désignant le boîtier d'interconnexion concerné par chaque ordre. Le décodeur 4 est adapté, à la réception d'un ordre concernant le boîtier Bk, à séparer les adresses qui sont appliquées à des lignes d'adresses LA, des ordres ou signaux de synchronisation qui sont appliqués à d'autres lignes LS. Les lignes LA et LS constituent les lignes locales de transmission numérique des commandes. Aux lignes LA et LS, est connecté un oscillateur de test 5 délivrant un signal de test H' aux caractéristiques bien définies, sur une ligne particulière LT. Les lignes LA, LS et LT constituent un groupe local de lignes LOC. Dans chaque boîtier d'interconnexion Bk, est disposé un organe de codage 6 connecté à un bus de données BD provenant des unités d'acquisition de la section adjacente Tk, comme on le verra en relation avec la Fig.4 L'organe de codage 6 est adapté à coder les données arrivant sur le bus BD suivant le code CMI3 bien connu des spécialistes et adapté à la transmission des signaux sur les fibres optiques. Les données codées issues de l'organe de codage 6 sont introduites dans une mémoire 7 du type FIFO par exemple. Les entrées de commande d'écriture et de lecture de la mémoire 7, sont reliées au décodeur 4. Sur l'entrée "horloge" de la mémoire, est appliqué le signal issu d'un décodeur d'horloge 8.

Les sorties du module Co/e de la section de flûte adjacente Tk sont connectées à deux entrées d'un second commutateur à trois entrées S2. La sortie de celui-ci, est connectée à une première entrée d'un commutateur S3 à deux entrées, l'autre entrée de celui-ci étant connectée à la sortie de la mémoire FIFO 7. La sortie du troisième commutateur S3 est connectée en parallèle aux entrées du module Ce/o à l'entrée de la section Tk-1 sur les voies de retour ltr1 et ltr2.

Des lignes d'alimentation électrique LAL courent tout le long de la flûte et, dans chaque boîtier Bk, un ensemble d'alimentation 9 connecté aux lignes LAL, produit les tensions électriques nécessaires au fonctionnement des éléments électroniques contenus dans le boîtier et la section de flûte adjacente. Les lignes de distribution du courant ne sont pas représentés.

La transmission des signaux entre le laboratoire de bord et les différents boîtiers est effectuée suivant la méthode de transmission quasi-asynchrone décrite dans la demande de brevet français FR-A-2653898. Les ordres codés sont transmis depuis le laboratoire sur les fibres optiques "aller" lta1 ou lta2 sur un rythme imposé par une première horloge, avec un débit de 2,56 Mbits/s. Les réponses des boîtiers Bk sont transmises sur les fibres de retour ltr1 ou ltr2 sur un rythme imposé par une seconde horloge disposée par exemple dans le dernier boîtier Bn (Fig.1), et avec un débit de 32,8 Mbits/s par exemple. A cet effet, le décodeur d'horloge 8 est connecté à la sortie du second commutateur S2 dans le but d'extraire le signal d'horloge H émis en tête des lignes de retour ltr1 ou ltr2.

Pour assurer l'indépendance des différents boîtiers vis-à-vis de l'horloge H, chaque boîtier comporte en outre un oscillateur d'horloge 10 connecté à la troisième entrée du second commutateur S2 et capable sur commande, de piloter la transmission des réponses des boîtiers en aval sur les voies de retour ltr1 ou ltr2.

L'acquisition des signaux sismiques dans chaque section de flûte est assurée par les différentes unités U1 à Up (Fig.1). On voit sur la Fig.4 que les différents récepteurs H1 à Hp qui en dépendent, sont connectés respectivement à des ensembles d'adaptation de signaux comportant chacun un préamplificateur à gain fixe 11 en série avec un filtre passe-bande 12 dont la bande passante est adaptée à celle des signaux sismiques utiles à acquérir. Un ensemble de commutation 13 est interposé entre chaque récepteur et l'entrée du préamplificateur correspondant. Un tel ensemble de commutation est déjà décrit dans le brevet FR 2 613 496 (US 4 862 425) déposé par la demanderesse. Son utilisation sera rappelée dans la suite de la description.

Les signaux issus des filtres sont appliqués respectivement aux entrées E1,E2...Ep d'un multiplexeur 14 pourvu d'au moins (p+1) entrées. Une de ces entrées Ep+1 est connectée à la masse. Les signaux à la sortie du multiplexeur 14 sont appliqués à un amplificateur à gain variable et à grande dynamique 15 tel que ceux décrits par exemple dans les brevets FR 2 593 004 (US 4 779 055) et FR 2 592 537 (US 4 774 474) au nom de la demanderesse. Les signaux amplifiés sont alors numérisés dans un convertisseur analogique-numérique 16 à virgule flottante, tel celui décrit dans la demande de brevet FR 2 626 423 également au nom de la demanderesse. Les mots numériques produits sont alors adaptés par un synchronisateur d'émission 17 pour leur transmission sur le bus BD vers le codeur 6 dans le boîtier Bk d'extrémité. Un élément de contrôle local 18 est connecté au groupe local LOC de lignes de transmission des commandes LA, LS et LT. Un registre de données 19 est de préférence interposé entre la mémoire 16 et le synchronisateur 17. Par un ensemble de lignes de commande LCOM, l'élément 18 est connecté aux entrées de commande des ensembles de commutation 13. Par d'autres lignes LM, LC et LSYN, l'élément de contrôle 17 envoie des signaux de contrôle respectivement au multiplexeur 14, au convertisseur 16 et au synchronisateur 17. L'élément de contrôle 17 est adapté à décoder les ordres qu'il reçoit du laboratoire de bord (3) via les moyens de décodage 4 (Fig.3) et les lignes locales de commande LA, LS, LT, et à commander les opérations d'acquisition par l'unité d'acquisition ou des opérations de test préalables de chaque voie d'acquisition. Ces opérations de test consistent à appliquer le signal de test reçu sur la ligne LT à chaque récepteur connecté à sa voie d'acquisition, à chaque voie déconnectée du récepteur correspondant ou bien à mesurer le niveau du bruit de fond de toute la chaîne d'acquisition.

L'ensemble des unités d'acquisition (U1-Um), des lignes de commande locales (LC, BD), et de la mémoire 7 (Fig. 3) constitue un appareil d'acquisition. L'ensemble constitué par le codeur 6 les éléments référencés 4, 5, 8, 10 et les commutateurs S1 à S3, constitue un module de transmission.

Le dispositif fonctionne de la manière suivante :

Les signaux sismiques captés par les récepteurs H1 à Hp de chaque groupe Gk, sont multiplexés, amplifiés, échantillonnés et numérisés par la chaîne d'acquisition correspondante (11, 12, 14-16) (cf. Fig 4). Chaque échantillon numérisé est transféré dans le registre 19. Par l'intermédiaire du décodeur d'ordres 4 et des éléments de contrôle locaux des différentes unités d'acquisition, les échantillons numérisés des différents registres 19 sont séquentiellement transmis par le bus de données BD, dans la mémoire FIFO 7. La même transmission séquentielle est effectuée pour tous les échantillons successifs issus des convertisseurs 16.

A l'issue de chaque cycle d'émission-réception sismique, le laboratoire central commande, par l'intermédiaire du décodeur d'ordres 4 dans les boîtiers Bk, la transmission sur les voies de retour ltr1 ou ltr2, du contenu des différentes mémoires 7, suivant la méthode de transmission quasi-asynchrone déjà mentionnée.

Préalablement au lancement des opérations d'acquisition sismiques, on contrôle les voies de transmission "aller" (lta) et "retour" (ltr), de manière à assurer une transmission bi-directionnelle sans défaut entre le laboratoire central et tous les boîtiers d'interconnexion. On procède de proche en proche comme pour la flûte sismique décrite dans le brevet précité FR 2 471 088 (US 4 398 271). Pour cela, on constitue une boucle de plus en plus longue que l'on referme au travers de tous les boîtiers d'interconnexion B1 à Bn successivement, pour renvoyer vers le laboratoire central par les voies retour", des signaux de test qu'il a émis sur les voies "aller", et l'on vérifie la bonne qualité des signaux reçus. Une instruction spécifique transmise et reconnue par le décodeur 4 (Fig.3), entraîne le transfert direct dans la mémoire 7 d'un signal de test , sa lecture et son application via le commutateur S3 aux voies de retour ltr1 et ltr2. Le signal d'horloge H nécessaire pour rythmer la retransmission du signal de test dans la boucle ainsi constituée, est obtenu en connectant la sortie du commutateur S2 sur la sortie de l'horloge locale 10. Quand les voies de transmission ont été sélectionnées à l'issue des rebouclages successifs, on effectue les différents tests des appareils d'acquisition déjà mentionnés.

On ne sortirait pas du cadre de l'invention en remplaçant les registres 19 (Fig. 4) par des mémoires locales susceptibles de contenir une partie au moins des signaux reçus au cours d'un même cycle d'émission-réception, et de transférer séquentiellement leurs contenus dans la mémoire FIFO 7 dans le boîtier pour leur transfert au laboratoire central (3).

## Revendications

1. Dispositif modulaire de réception, d'acquisition et de transmission à un poste central de commande et d'enregistrement de signaux sismiques ou acoustiques utilisable dans un milieu liquide notamment pour des opérations de prospection sismique marine comportant une gaine de grande longueur constituée par l'interconnexion d'une série de sections (T1-Tn) interconnectées les unes aux autres par des boîtiers intercalés (B1-Bn), un grand nombre de récepteurs d'ondes sismiques ou acoustiques répartis le long de la gaine et un système modulaire d'acquisition et de transmission audit poste central de commande et d'enregistrement, des données reçus par les récepteurs d'ondes, ce système d'acquisition et de transmission comportant un ensemble d'appareils d'acquisition pour collecter les signaux produits par les récepteurs sismiques répartis le long d'au moins une section de la gaine, ainsi qu'un ensemble de transmission comportant des modules de transmission répartis dans les boîtiers d'interconnexion et connectés au poste central par des câbles de transmission numérique comprenant des voies de transmission communes de signaux de service (lta1, lta2) pour les ordres adressés par le laboratoire aux différents appareils d'acquisition, des moyens (4) de décodage de ces ordres et des voies de transmission communes de données (ltr1, ltr2) pour le transfert audit poste central (3) des réponses des différents appareils d'acquisition, le dispositif étant caractérisé en ce que :

- chaque appareil d'acquisition comporte un moyen de mémorisation de données (7), une pluralité d'unités d'acquisition (Uk) disposées dans au moins une section de la gaine, chacune de ces unités d'acquisition étant placée dans la gaine au voisinage d'une pluralité de récepteurs sismiques (H1-Hp) pour l'acquisition séquentielle des signaux qu'ils reçoivent, chaque unité d'acquisition (Uk) comportant un élément de synchronisation local (18), et un élément convertisseur analogique numérique (16);
- l'ensemble de transmission comporte des lignes locales (LOC) de transmission numérique des commandes reliant les moyens (4) de décodage des ordres à l'élément de synchronisation local (18) et des lignes locales de transmission numérique des données reliant tous les modules de transmission (UAC) audit moyen de mémorisation de données (7); et
- chaque module de transmission comporte des moyens (8) de codage des signaux transmis audit poste central par lesdites voies de transmission de données (ltr1, ltr2).

2. Dispositif selon la revendication 1, caractérisé en ce que l'ensemble de transmission comporte des moyens pour engendrer un signal d'horloge (H) rythmant la transmission des signaux sur lesdites voies de transmission des données comprenant un oscillateur d'horloge (10) dans le boîtier d'acquisition le plus éloigné du laboratoire central.

3. Dispositif selon la revendication 1, caractérisé en ce que l'ensemble de transmission comporte des moyens pour engendrer un signal d'horloge rythmant la transmission des signaux sur lesdites voies de transmission des données comprenant des oscillateurs d'horloge (10) disposés dans une partie au moins des boîtiers d'interconnexion et des moyens de commutation (S2) pour sélectionner un quelconque des oscillateurs d'horloge sur commande des moyens de décodage (4).

4. Dispositif selon la revendication 2 ou 3, caractérisé en ce que ledit signal d'horloge est appliqué à chaque moyen (7) de mémorisation pour rythmer la lecture des données numérisées qu'il contient.

5. Dispositif selon l'une des revendications 1 à 3, caractérisé en ce que chaque appareil d'acquisition comporte un ensemble de test pour vérifier le bon fonctionnement des récepteurs et de chaque unité d'acquisition.

6. Dispositif selon l'une des revendications précédentes, caractérisé en ce que chaque récepteur sismique est associé à un ensemble (11-15) d'adaptation des signaux reçus.

7. Dispositif selon les revendications 5 et 6, caractérisé en ce que chaque ensemble de test comporte un oscillateur de test (5) dans un boîtier d'interconnexion adjacent, le signal issu de cet oscillateur étant dirigé sélectivement par un ensemble de commutation (13) dans chaque unité d'acquisition (Uk) et sur commande de l'élément de synchronisation local (18), vers l'ensemble d'adaptation de signal associé à chaque récepteur sismique.

8. Dispositif selon l'une des revendications précédentes, caractérisé en ce que les ensembles d'adaptation des signaux reçus comportent des préamplificateurs (11) et des filtres (12) recevant les signaux produits par les récepteurs sismiques associés (H1-Hp), et chaque module d'acquisition comporte un multiplexeur (14) à plusieurs entrées pour recevoir les signaux amplifiés et filtrés, un amplificateur à gain variable (15), un convertisseur analogique-numérique (16) et un synchronisateur d'émission (17).

9. Dispositif selon l'une des revendications précédentes, caractérisé en ce que ladite voie de transmission (ltr1, ltr2) des réponses comporte au moins une fibre optique.

10. Dispositif selon la revendication 8, caractérisé en ce que ladite voie de transmission des ordres (lta1, lta2) comporte aussi au moins une fibre optique.

11. Dispositif selon la revendication 9 ou 10, caractérisé en ce que chaque voie de transmission comporte deux canaux de transmission et des commutateurs (S1-S3) disposés dans les boîtiers d'interconnexion (Bk) pour sélectionner des canaux pour les signaux entrant dans chacun d'eux et des canaux pour les signaux sortant de chacun d'eux.

**Claims**

1. A modular device for the reception and acquisition of seismic or acoustic signals for use in a liquid medium and their transmission to a central control and recording station, notably for marine seismic prospecting operations, comprising a sheath of great length formed by the connection of a series of sections (Tl-Tn) connected to one another by interposed boxes (Bl-Bn), a large number of seismic or acoustic wave receivers distributed along the sheath and a modular system for the acquisition and transmission to the said central control and recording station of the data received by the wave receivers, this acquisition and transmission system comprising a set of acquisition devices for collecting the signals produced by the seismic receivers distributed along at least one section of the sheath, as well as a transmission set comprising transmission modules distributed in the connection boxes and connected to the central station through digital transmission cables comprising common channels for the transmission of working signals (lta1, lta2) for the orders addressed by the laboratory to the different acquisition devices, means (4) for decoding these orders and common data transmission channels (ltr1, ltr2) for transferring, to the said central station (3), the responses of the different acquisition apparatuses, the device being characterised in that:

- each acquisition device comprises means (7) for storing data, a plurality of acquisition units (Uk) arranged in at least one section of the sheath, each of these acquisition units being located in a sheath close to a plurality of seismic receivers (Hl-Hp) for the sequential acquisition of the signals which they receive, each acquisition unit (Uk) comprising a local synchronizing element (18), and an analogue-to-digital converting means (16);
- the transmission set comprises local lines (LOC) for the digital transmission of commands connecting the means (4) for decoding orders to the local synchronization element (18) and local lines for the digital transmission of data connecting all the transmission modules (UAC) to the said data storage means (7); and
- each transmission module comprises means (8) for coding the signals transmitted to said central station by the said data transmission channels (ltr1, ltr2).

2. Device according to Claim 1, characterised in that the transmission set comprises means for generating a clock signal (H) punctuating the transmission of the signals over the said data transmission channels comprising a clock oscillator (10) in the acquisition box which is the most distant from the central laboratory.

3. Device according to Claim 1, characterised in that the transmission set comprises means for generating a clock signal punctuating the transmission of the signals over the said data transmission channels comprising clock oscillators (10) arranged in at least some of the connection boxes and switching means (S2) for selecting any one of the clock oscillators upon request from the decoding means (4).

4. Device according to Claim 2 or 3, characterised in that the said clock signal is applied to each storage means (7) to punctuate the reading of the digitized data which it contains.

5. Device according to one of Claims 1 to 3, characterised in that each acquisition apparatus comprises a testing means to check the correct functioning of the receivers and of each acquisition unit.

6. Device according to one of the preceding claims, characterised in that each seismic receiver is associated with an assembly (11-15) for adapting the signals received.

7. Device according to Claims 5 and 6, characterised in that each testing means comprises a test oscillator (5) in an adjacent connection box, the signal originating from this oscillator being selectively directed by a switching set (13) into each acquisition unit (Uk) and, on request from the local synchronization element (18), to the signal adaptation means associated with each seismic receiver.

8. Device according to any one of the preceding claims, characterised in that the means for adapting the signals received comprise pre-amplifiers (11) and filters (12) receiving the signals produced by the associated seismic receivers (HI-Hp), and each acquisition module comprises a multiplexer (14) with several inputs for receiving the amplified and filtered signals, a variable-gain amplifier (15), an analogue-to-digital converter (16) and a transmission synchronizer (17).

9. Device according to one of the preceding claims, characterised in that the said response transmission channel (ltr1, ltr2) comprises at least one optical fibre.

10. Device according to Claim 8, characterised in that the said order transmission channel (ltal, lta2) also comprises at least one optical fibre.

11. Device according to Claim 9 or 10, characterised in that each transmission channel comprises two transmission routes and switches (S1-S3) arranged in the connection boxes (Bk) to select routes for the signals entering each of them and routes for the signals leaving each of them.

**Patentansprüche**

1. Modular aufgebaute Vorrichtung zum Empfang, zur Erfassung und zur Übertragung, auf eine zentrale Befehls- und Aufzeichnungsstation, seismischer oder akustischer Signale, die in einer flüssigen Umgebung insbesondere für Vorgänge der seismischen Prospektion im Wasser verwendbar ist, die eine Hülle großer Länge umfaßt, die durch die Verschaltung einer Reihe von beschnitten (Tl-Tn) gebildet ist, die miteinander über zwischengeschaltete Gehäuse (Bl-Bn) verschaltet sind, wobei eine große Anzahl von Empfängern für seismische oder akustische Signale, die längs der Hülle angeordnet sind und ein modular aufgebautes System zur Erfassung und zur Übertragung der von den Wellenempfängern empfangenen Daten auf diese zentrale Befehls- und Aufzeichnungsstation vorgesehen ist, wobei dieses Erfassungs- und Übertragungssystem eine Gruppe von Erfassungsgeräten umfaßt, um die durch die seismischen, längs wenigstens eines Abschnittes der Hülle verteilten Empfänger erzeugten Signale zu sammeln, sowie einer Übertragungsgruppe mit Übertragungsmodulen, die in den Verbindungsgehäusen verteilt und mit der Zentralstation über digitale Übertragungskabel verbunden sind, welche gemeinsame Übertragungswege für Betriebssignale (lta1, lta2) für die durch das Labor an die verschiedenen Erfassungsgeräte adressierten Befehle umfassen, Mittel (4) zum Dekodieren dieser Befehle und gemeinsame Übertragungswege für Daten (ltr1, ltr2) für die Übertragung an die Zentralstation 3, von Antworten der verschiedenen Erfassungsgeräte, wobei die Vorrichtung sich dadurch auszeichnet, daß:
   - jedes Erfassungsgerät ein Datenspeichermittel (7), und eine Vielzahl von Erfassungseinheiten (Uk), die in wenigstens einem abschnitt der Hülle angeordnet sind, umfaßt, wobei jede dieser Erfassungseinheiten in der Hülle benachbart einer Vielzahl von seismischen Empfängern (HI-Hp) zur sequentiellen Erfassung der Signale, die sie empfangen, angeordnet ist, wobei jede Erfassungseinheit (Uk) ein lokales Synchronisationselement (18) und ein Analog-Digital-Umsetzerelement (16) aufweist;
   - die Übertragungsanordnung lokale Leitungen (LOC) zur digitalen Übertragung der Befehle aufweist, welche die Dekodierungsmittel (4) für die Befehle mit dem lokalen Synchronisationselement (18) verbindet und lokale Leitungen zur digitalen Übertragung der Daten umfaßt, welche sämtliche Übertragungsmoduln (UAC) mit der Speicherdateneinheit (7) verbindet; und

- jeder Übertragungsmodul Mittel (8) zur Codierung der an die Zentralstation vermittels dieser Datentransmissionswege (ltr1, ltr2) übertragenen Signale umfaßt.

2. Vorrichtung nach Anspruch 1, dadurch gekennzeichnet, daß die Übertragungsgruppe Mittel umfaßt, um ein Taktgebersignal (H) zu erzeugen, das die Übertragung der Signale auf diesen Übertragungswegen von Daten eintaktet, die einen Taktgeberoszillator (10) im vom Zentrallabor am weitesten entfernten Erfassungsgehäuse umfaßt.

3. Vorrichtung nach Anspruch 1, dadurch gekennzeichnet, daß die Übertragungsgruppe Mittel umfaßt, um ein Taktgebersignal zu erzeugen, welches die Übertragung der Signale auf diesen Datenübertragungswegen umfaßt und Taktgeberoszillatoren (10) umfaßt, die in wenigstens einem Teil der Verschaltungsgehäuse angeordnet sind, sowie Umschaltmittel (S2), um einen beliebigen der Taktgeberoszillatoren auf Befehl der Decodierungsmittel (4) auszuwählen.

4. Vorrichtung nach Anspruch 2 oder 3, dadurch gekennzeichnet, daß dieses Taktgebersignal an jedes Speichermittel (7) gelegt ist, um das Lesen der von ihr enthaltenen digitalisierten Daten, die es enthält, einzutakten.

5. Vorrichtung nach einem der Ansprüche 1 bis 3, dadurch gekennzeichnet, daß jede Erfassungsvorrichtung eine Testgruppe umfaßt, um die sichere Funktionsweise der Empfänger- und jeder Erfassungseinheit zu überprüfen.

6. Vorrichtung nach einem der vorhergehenden Ansprüche, dadurch gekennzeichnet, daß jeder seismische Empfänger einer Gruppe (11-15) zur Adaptation der empfangenen Signale zugeordnet ist.

7. Vorrichtung nach einem der Ansprüche 5 und 6, dadurch gekennzeichnet, daß jede Testgruppe einen Testoszillator (5) in einem benachbarten Verschaltungsgehäuse umfaßt, wobei das aus diesem Oszillator stammende Signal selektiv über eine Umschaltgruppe (13) in jeder Erfassungseinheit (Uk) und auf Befehl des lokalen Synchronisationselements (18) gegen die jedem seismischen Empfänger zugeordnete Signaladaptationsgruppe gerichtet wird.

8. Vorrichtung nach einem der vorhergehenden Ansprüche, dadurch gekennzeichnet, daß die Adaptationsgruppen der empfangenen Signale Vorverstärker (11) und Filter (12) umfassen, welche die durch die zugeordneten seismischen Empfänger (Hl-Hp) erzeugten Signale empfangen, und jeder Erfassungsmodul einen Multiplexer (14) mit mehreren Eingängen zum Empfang der verstärkten und gefilterten Signale, einen Verstärker mit variabler Verstärkung (15), einen Analog-Digital-Umsetzer (16) und einen Sendesynchronsator (17) umfaßt.

9. Vorrichtung nach einem der vorhergehenden Ansprüche, dadurch gekennzeichnet, daß dieser Übertragungsweg (ltr1, ltr2) der Antworten wenigstens eine optische Faser umfaßt.

10. Vorrichtung nach Anspruch 8, dadurch gekennzeichnet, daß dieser Übertragungsweg der Befehle (lta1, lta2) auch wenigstens eine optische Faser umfaßt.

11. Vorrichtung nach Anspruch 9 oder 10, dadurch gekennzeichnet, daß jeder Übertragungsweg zwei Übertragungskanäle und Umschalter (S1-S3) umfaßt, die in den Verschaltgehäusen (Bk) angeordnet sind, um Kanäle für die in jeden hiervon eintretenden Signale und Kanäle für die aus jedem hiervon austretenden Signale auszuwählen.

**FIG.1**

**FIG.2**

EP 0 426 511 B1

FIG.3

FIG.4

EP 0 426 511 B1